(19) Europäisches Patentamt
European Patent Office
Office européen des brevets

(11) **EP 0 869 336 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(51) Int Cl.:
*G01F 1/58* *(2006.01)*     *G01F 1/60* *(2006.01)*

(21) Anmeldenummer: **98104861.4**

(22) Anmeldetag: **18.03.1998**

(54) **Magnetisch-induktives Durchflussmessgerät für strömende Medien**

Electromagnetic flowmeter for flowing media

Débitmètre électromagnétique pour milieux en écoulement

(84) Benannte Vertragsstaaten:
**CH DE FR GB LI NL**

(30) Priorität: **01.04.1997 DE 19713227**
**18.04.1997 DE 19716151**

(43) Veröffentlichungstag der Anmeldung:
**07.10.1998 Patentblatt 1998/41**

(73) Patentinhaber: **KROHNE MESSTECHNIK GMBH & CO. KG**
**47058 Duisburg (DE)**

(72) Erfinder:
• **Brockhaus, Helmut, Dr.-Ing.**
**46535 Dinslaken (DE)**

• **Florin, Wilhelm**
**47198 Duisburg (DE)**
• **Hoogendijk, Christiaan Johan, Ing.**
**4254 DC Sleeuwijk (NL)**

(74) Vertreter: **Gesthuysen, von Rohr & Eggert**
**Patentanwälte**
**Postfach 10 13 54**
**45013 Essen (DE)**

(56) Entgegenhaltungen:
EP-A- 0 027 181     DE-A- 1 473 049
US-A- 3 491 593     US-A- 5 325 728

## Beschreibung

Die Erfindung betrifft ein magnetisch-induktives Durchflußmeßgerät für strömende Medien, mit einem Meßrohr, einem der Erzeugung eines zumindest im wesentlichen senkrecht zur Meßrohrachse verlaufenden Magnetfeldes dienenden Magneten, mindestens zwei entlang einer zumindest im wesentlichen senkrecht zur Meßrohrachse und zur Magnetfeldrichtung verlaufenden Verbindungslinie angeordneten Meßelektroden, mindestens einer Bezugselektrode und einem über Meßelektrodenanschlüsse mit den Meßelektroden verbundenen, der Verstärkung der an den Meßelektroden anliegenden Meßspannung dienenden, einen Bezugspotentialanschluß aufweisenden Differenzverstärker. Die Erfindung betrifft auch ein magnetisch-induktives Durchflußmeßgerät der zuvor beschriebenen Art, bei dem keine Bezugselektrode vorgesehen ist.

Das grundlegende Prinzip des magnetisch-induktiven Durchflußmeßgerätes für strömende Medien geht bereits auf Faraday zurück, der im Jahre 1832 vorgeschlagen hat, das Prinzip der elektrodynamischen Induktion zur Strömungsgeschwindigkeitsmessung anzuwenden. Nach dem Faraday'schen Induktionsgesetz entsteht in einem strömenden Medium, welches Ladungsträger mit sich führt und durch ein Magnetfeld fließt, eine elektrische Feldstärke senkrecht zur Strömungsrichtung und zum Magnetfeld. Dieses Gesetz wird bei einem magnetisch-induktiven Durchflußmesser dadurch genutzt, daß ein Magnet, regelmäßig bestehend aus zwei Magnetspulen, ein Magnetfeld senkrecht zur Strömungsrichtung in dem Meßrohr erzeugt. Innerhalb dieses Magnetfeldes liefert jedes sich durch das Magnetfeld bewegende Volumenelement des strömenden Mediums mit der in diesem Volumenelement entstehenden Feldstärke einen Beitrag zu der über die Meßelektroden abgegriffenen Meßspannung. Die Meßelektroden werden bei den bekannten magnetisch-induktiven Durchflußmeßgeräten so ausgeführt, daß sie entweder galvanisch oder kapazitiv mit dem strömenden Medium gekoppelt sind. Ein besonderes Merkmal der magnetisch-induktiven Durchflußmeßgeräte ist die Proportionalität zwischen der Meßspannung und der über den Querschnitt des Rohres gemittelten Strömungsgeschwindigkeit des Mediums, d. h. zwischen Meßspannung und Volumenstrom.

Bei den bekannten magnetisch-induktiven Durchflußmeßgeräten, von denen die Erfindung ausgeht, wird die zwischen den Meßelektroden auftretende Meßspannung über elektronische Differenzverstärker verstärkt, wobei die Differenzverstärker gegenüber einem Bezugspotential arbeiten, welches üblicherweise dem Erdpotential entspricht. Zu diesem Zweck ist der Bezugspotentialanschluß der Differenzverstärker direkt mit einem üblicherweise auf Erdpotential liegenden Potentialausgleich verbunden. Gleichzeitig ist auch das strömende Medium über Bezugspotentialringe oder Bezugspotentialelektroden mit dem Potentialausgleich verbunden, so daß auch das strömende Medium auf Bezugspotential liegt. Da das Bezugspotential üblicherweise das Erdpotential ist, werden üblicherweise die Bezugspotentialringe als Erdungsringe und die Bezugspotentialelektroden als Erdungselektroden bezeichnet; diese Terminologie wird auch im folgenden verwendet.

Das Meßrohr eines magnetisch-induktiven Durchflußmeßgerätes ist im Bereich der Meßelektroden stets isolierend ausgeführt. Außerhalb dieses Bereiches sind im Stand der Technik regelmäßig Erdungsringe angebracht, die ringförmig mit dem strömenden Medium in elektrischen Kontakt stehen. Diese Erdungsringe werden mit dem bereits erwähnten Potentialausgleich verbunden, so daß das Potential des strömenden Mediums damit auf Bezugspotential, üblicherweise Erdpotential liegt. Beim Einsatz eines magnetisch-induktiven Durchflußmeßgerätes im industriellen Bereich treten häufig hohe Ströme zwischen den Erdungsringen und dem Potentialausgleich auf, insbesondere aufgrund induktiver Einkopplungen. Die Erdungsringe müssen eine hohe chemische Resistenz aufweisen und verursachen daher bei größeren Nennweiten entsprechend hohe Kosten. Die Kosten für die Erdungsringe können dabei durchaus die Gesamtkosten für die restlichen Bauteile des magnetisch-induktiven Durchflußmeßgerätes erreichen. Zudem sollten für die Meßelektroden und die Erdungsringe stets übereinstimmende Materialien eingesetzt werden, da es sonst zu elektrochemischen Reaktionen kommen kann, die eine Messung der Durchflußgeschwindigkeit stark beeinträchtigen. Schließlich sind die Erdungsringe auch dahingehend problematisch, da durch ihren Einsatz zusätzlich mögliche Lekkagestellen entstehen.

Um den Materialeinsatz, der mit den Potentialausgleichsmaßnahmen verbunden ist, gering zu halten, ist es aus dem Stand der Technik auch bekannt, statt Erdungsringe mindestens eine Erdungselektrode einzusetzen. Diese Erdungselektroden werden im Bereich des isolierten Meßrohres ähnlich den Meßelektroden angebracht. Die Erdungselektroden können in diesem Fall relativ problemlos aus dem selben Material hergestellt werden, aus dem auch die Meßelektroden hergestellt sind, so daß im Ergebnis zwischen den Meßelektroden und den Erdungselektroden keine elektrochemischen Reaktionen auftreten. Auch hier entsteht jedoch wieder mindestens eine zusätzliche mögliche Lekkagestelle. Bei Potentialdifferenzen zwischen dem strömenden Medium und dem Potentialausgleich können auch hier hohe elektrische Ströme auftreten, durch die sich die Erdungselektroden in einem elektrolytischen Prozeß auflösen, so daß ein Leck im Meßrohr entstehen würde.

Aus der US 5,325,728 und aus der DE 1 473 049 A sind Durchflußmeßgeräte ohne Bezugselektrode bekannt, bei denen beide Meßelektrodenanschlüsse - mittelbar - mit einem Potentialausgleich verbunden sind, einhergehend mit der grundsätzlichen Gefahr ungewollter Ausgleichsströme. Aus der EP 0 027 181 A2 ist ein magnetischesinduktives Durchflußmeßgerät bekannt, bei dem die Meßelektrodenanschlüsse periodisch auf ein Bezugspotential geschaltet werden, wodurch ebenfalls ein Strompfad geschaffen wird, über den ungewollte Ausgleichsströme fließen können,

Bei dem magnetisch-induktiven Durchflußmeßgerät gemäß der US 3,491,593 werden hohe elektrische Ausgleichsströme zwischen einer Bezugselektrode und einem Potentialausgleich verhindert, indem alle Meßsignale separat - auch die von der Bezugselektroden herrührenden Meßsignale - vor der eigentlichen Auswertung durch einen Differenzverstärker über eine weitere hochohmige Differenzverstärkerschaltung aufbereitet werden, was schaltungstechnisch sehr aufwendig ist.

Der Erfindung liegt somit die Aufgabe zugrunde, ein magnetisch-induktives Durchflußmeßgerät für strömende Medien zur Verfügung zu stellen, welches deutlich geringere Anforderungen an die Maßnahmen zur Herstellung eines Bezugspotentials stellt.

Die zuvor hergeleitete und aufgezeigte Aufgabe ist bei dem eingangs beschriebenen magnetisch-induktiven Durchflußmeßgerät, bei dem eine Bezugselektrode vorhanden ist, erfindungsgemäß dadurch gelöst, daß der Bezugspotentialanschluß des Differenzverstärkers nur mit der Bezugselektrode und die Bezugselektrode nur mit dem Bezugspotentialanschluß des Differenzverstärkers verbunden ist und daß der Differenzverstärker nicht mit einem Potentialausgleich verbunden ist. Bei dem eingangs beschriebenen magnetisch-induktiven Durchflußmeßgerät, bei dem eine Bezugselektrode nicht vorhanden ist, ist die zugrundeliegende Aufgabe dadurch gelöst, daß der Bezugspotentialanschluß des Differenzverstärkers nur mit mindestens einer Meßelektrode verbunden ist und daß der Differenzverstärker nicht mit einem Potentialausgleich verbunden ist. In beiden Fällen kann es sich bei dem Potentialausgleich um einen solchen handeln, der, wie üblich auf Erdpotential liegt.

Durch die erfindungsgemäßen Maßnahmen ist gewährleistet, daß der Differenzverstärker gegenüber dem Potential des strömenden Mediums als Bezugspotential arbeitet, das Potential des strömenden Mediums jedoch nicht zwingend - durch die Verbindung mit einem Potentialausgleich - auf einem allgemeinen Bezugspotential, insbesondere nicht auf Erdpotential liegen muß. Somit ist einerseits gewährleistet, daß der Differenzverstärker, vorausgesetzt er ist ausreichend spannungsfest ausgeführt, sauber, ohne hohe Gleichtaktspannungen arbeiten kann, und andererseits sichergestellt, daß keine hohen Ströme zwischen dem strömenden Medium und dem z. B. auf Erdpotential liegenden Potentialausgleich abgeleitet werden müssen. Auftretende Potentialschwankungen des strömenden Mediums werden bei der erfindungsgemäßen Ausgestaltung nicht abgeleitet, sondern dem Differenzverstärker über seinen Bezugspotentialanschluß als Bezugspotential zur Verfügung gestellt, so daß dieser die an seinen Meßelektrodenanschlüssen anliegenden Potentiale relativ zueinander und in definiertem Abstand zum Potential des strömenden Mediums verstärken kann.

Bei der Ausführungsform des erfindungsgemäßen magnetisch-induktiven Durchflußmeßgerätes, bei der eine - besondere - Bezugselektrode nicht vorhanden ist, ist vorzugsweise der Bezugspotentialanschluß des Differenzverstärkers mit beiden Meßelektroden über jeweils einen Widerstand verbunden.

Durch diese Anordnung zweier möglichst identischer Widerstände ist gewährleistet, daß am Bezugspotentialanschluß des Differenzverstärkers das gemittelte Potential des strömenden Mediums anliegt. Da bei einem magnetisch-induktiven Durchflußmeßgerät die Signalquelle in Form der Meßelektroden hochohmig ist, ist die Anordnung der Widerstände vorteilhaft, um zu gewährleisten, daß am Differenzverstärker noch eine verwertbare Meßspannung anliegt.

Durch die bei der zuvor erläuterten Ausgestaltung der Erfindung fehlende direkte niederohmige elektrische Verbindung zwischen dem strömenden Medium und dem auf Erdpotential liegenden Potentialausgleich können Störspannungen zwischen dem strömenden Medium und dem Potentialausgleich entstehen. Diese Störspannungen sollten möglichst nicht über dem Differenzverstärker, sondern über der Kapazität zwischen dem Bezugspotentialanschluß des Differenzverstärkers und dem Potentialausgleich abfallen. Dieser erwünschte Abfall ist dadurch gewährleistet, daß die Kapazität zwischen dem Bezugspotentialanschluß des Differenzverstärkers und dem Potentialausgleich, in der Regel den, Erdpotential, möglichst gering ist.

Zur Gewährleistung einer hohen meßgenauigkeit ist bei einem erfindungsgemäß ausgestalteten magnetisch-induktiven Durchflußmeßgerät weiter vorteilhaft, wenn der Differenzverstärker einen den Eingangswiderstand zwischen den Meßelektrodenanschlüssen und den, Bezugspotentialanschluß mindestens um den Faktor 5 übersteigenden Eingangswiderstand zwischen den Meßelektrodenanschlüssen aufweist. Insbesondere dann, wenn der Bezugspotentialanschluß des Differenzverstärkers mit mindestens einer der Meßelektroden verbunden ist, sollte der Eingangswiderstand zwischen den Meßelektrodenanschlüssen und dem Bezugspotentialanschluß gegenüber dem Eingangswiderstand zwischen den Meßelektrodenanschlüssen so klein wie möglich sein. Die Erhöhung der Meßgenauigkeit ergibt sich dabei aus der bereits erwähnten Tatsache, daß die Meßelektroden eine hochohmige Signalquelle darstellen.

Zur Verwirklichung eines besonders hohen Eingangswiderstandes zwischen den Meßelektrodenanschlüssen und eines niedrigen Eingangswiderstandes zwischen den Meßelektrodenanschlüssen und dem Bezugspotentialanschluß ist der Differenzverstärker dadurch gekennzeichnet, daß dieser zwei jeweils mit ihren nicht-invertierenden Eingängen mit einem der Meßelektrodenanschlüsse verbundene Operationsverstärker, jeweils zwei zwischen die Meßelektrodenanschlüsse und den Bezugspotentialanschluß geschaltete Gleichtakteingangswiderstände, jeweils einen zwischen die Ausgänge der Operationsverstärker und den jeweiligen Mittelabgriff der Gleichtakteingangswiderstände geschalteten Mitkopplungswiderstand, jeweils einen zwischen die Ausgänge der Operationsverstärker und die invertierenden Eingänge der Operationsverstärker geschalteten Verstärkungserhöhungswiderstand und mindestens einen zwischen die invertierenden Eingänge der Operationsverstärker geschalteten Verstärkungsbegrenzungswiderstand aufweist. Vorzugsweise ist dabei die Differenzverstärkung der Operationsverstärker größer ist als ihre Gleichtaktverstärkung.

Dadurch, daß jeweils der mit einem der Meßelektrodenanschlüsse verbundene Gleichtakteingangswiderstand einen deutlich höheren Widerstand aufweist als der mit dem Bezugspotentialanschluß verbundene Gleichtakteingangswiderstand, entspricht der Eingangswiderstand des Differenzverstärkers zwischen den Meßelektrodenanschlüssen und dem Bezugspotentialanschluß im wesentlichen dem Widerstand des mit einem der Meßelektrodenanschlüsse verbundenen Gleichtakteingangswiderstands. Diese jeweils mit einem der Meßelektrodenanschlüsse verbundenen Gleichtakteingangswiderstände werden dabei über den jeweils zugeordneten Mitkopplungswiderstand und den mit dem Bezugspotentialanschluß verbundenen Gleichtakteingangswiderstand gebootstrappt.

Zur Kompensation von Toleranzen zwischen den Werten der einzelnen Widerstände Ist es vorteilhaft, daß zwischen den Mittelabgriff der Gleichtakteingangswiderstände und dem Bezugspotentialanschluß jeweils ein Kompensationswiderstand geschaltet ist. Mit Hilfe dieses Kompensationswiderstandes lassen sich bei geeigneter Dimensionierung die Toleranzen kompensieren.

Die bereits erwähnten Toleranzen bei den im Differenzverstärker eingesetzten Widerständen können zu einer Asymmetrie des Differenzverstärkers führen. Zur Verringerung dieser Asymmetrie ist vor den Bezugspotentialanschluß ein Symmetrisierungswiderstand geschaltet. Dieser Symmetrisierungswiderstand beeinflußt ausschließlich den Eingangswiderstand zwischen den Meßelektrodenanschlüssen und dem Bezugspotentialanschluß des Differenzverstärkers.

Schließlich erfährt der in einem erfindungsgemäßen magnetisch-induktiven Durchflußmeßgerät eingesetzte Differenzverstärker eine weitere vorteilhafte Ausgestaltung dadurch, daß zumindest die niederohmigen Gleichtakteingangswiderstände, die Mittkopplungswiderstände, die Verstärkungserhöhungswiderstände und der Verstärkungsbegrenzungswiderstand auf mindestens einem Substrat in Dünnfilmtechnik ausgeführt sind. Die mit dieser Technik realisierbaren geringen Toleranzen im Promillebereich ermöglichen im Ergebnis die Realisierung des erwünschten sehr hohen Eingangswiderstandes zwischen den Meßelektrodenanschlüssen.

Im einzelnen gibt es nun verschiedene Möglichkeiten, das erfindungsgemäße magnetisch-induktive Durchflußmeßgerät auszugestalten und weiterzubilden. Dazu wird verwiesen einerseits auf die den Patentansprüchen 1 und 2 nachgeordneten Patentansprüche, andererseits auf die Beschreibung von bevorzugten Ausführungsbeispielen in Verbindung mit der Zeichnung. In der Zeichnung zeigt

Fig. 1    schematisch ein aus dem Stand der Technik bekanntes magnetisch-induktives Durchflußmeßgerät,

Fig. 2    schematisch ein erstes Ausführungsbeispiel eines erfindungsgemäßen magnetisch-induktiven Durchflußmeßgerätes,

Fig. 3    schematisch ein zweites Ausführungsbeispiel eines erfindungsgemäßen magnetisch-induktiven Durchflußmeßgerätes,

Fig. 4    ein Schaltbild eines ersten Ausführungsbeispiels eines Differenzverstärkers zum Einsatz in einem erfindungsgemäßen magnetisch-induktiven Durchflußmeßgerät, und

Fig. 5    ein Schaltbild eines zweiten Ausführungsbeispiels eines Differenzverstärkers zum Einsatz in einem erfindungsgemäßen magnetisch-induktiven Durchflußmeßgerät.

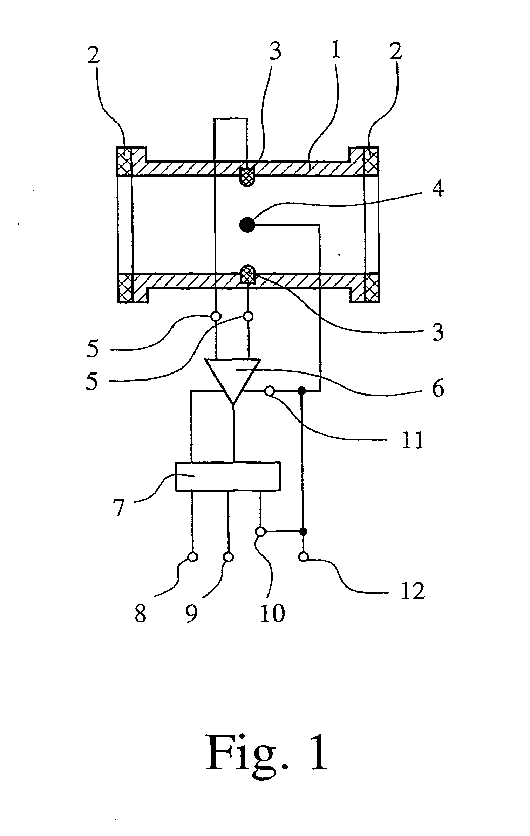

In Fig. 1 ist dargestellt ein aus dem Stand der Technik bekanntes magnetisch-induktives Durchflußmeßgerät für strömende Medien, mit einem Meßrohr 1, Dichtungen 2 zum Anschluß des Meßrohrs 1 an ein umgebendes, nicht dargestelltes Rohrleitungssystem, einem nicht dargestellten, der Erzeugung eines senkrecht zur Meßrohrachse verlaufenden Magnetfeldes dienenden Magneten, zwei entlang einer senkrecht zur Meßrohrachse und zur Magnetfeldrichtung verlaufenden Verbindungslinie angeordnete Meßelektroden 3, einer Bezugselektrode 4 und einem über Meßelektrodenanschlüsse 5 mit den Meßelektroden 3 verbundenen, der Verstärkung der an den Meßelektroden 3 anliegenden Meßspannung dienenden Differenzverstärker 6. Weiter ist in Fig. 1 eine in der Regel mit dem magnetisch-induktiven Durchflußmeßgerät verbundene weiterverarbeitende Elektronik 7 mit einem oder mehreren Ausgangsanschlüssen 8, einem oder mehreren Versorgungsanschlüssen 9 und einem Potentialausgleichsanschluß 10 dargestellt. Bei den, aus dem Stand der Technik bekannten magnetisch-induktiven Durchflußmeßgerät sind die Bezugselektrode 4, der Potentialausgleichsanschluß 10 der Elektronik 7 und der Bezugspotentialanschluß 11 des Differenzverstärkers 6 mit einem auf Erdpotential liegenden Potentialausgleich 12 verbunden. Somit wird bei dem aus dem Stand der Technik bekannten magnetisch-induktiven Durchflußmeßgerät das Potential des strömenden Mediums stets auf Erdpotential gehalten. Da gerade im industriellen Bereich häufig starke elektromagnetische Felder in der Umgebung eines magnetisch-induktiven Durchflußmeßgerätes auftreten, erreicht der zwischen der Bezugselektrode 4 und dem Potentialausgleich 12 fließende Strom ganz erhebliche Werte, die zu einer starken elektrochemischen Belastung der Bezugselektrode 4 führen.

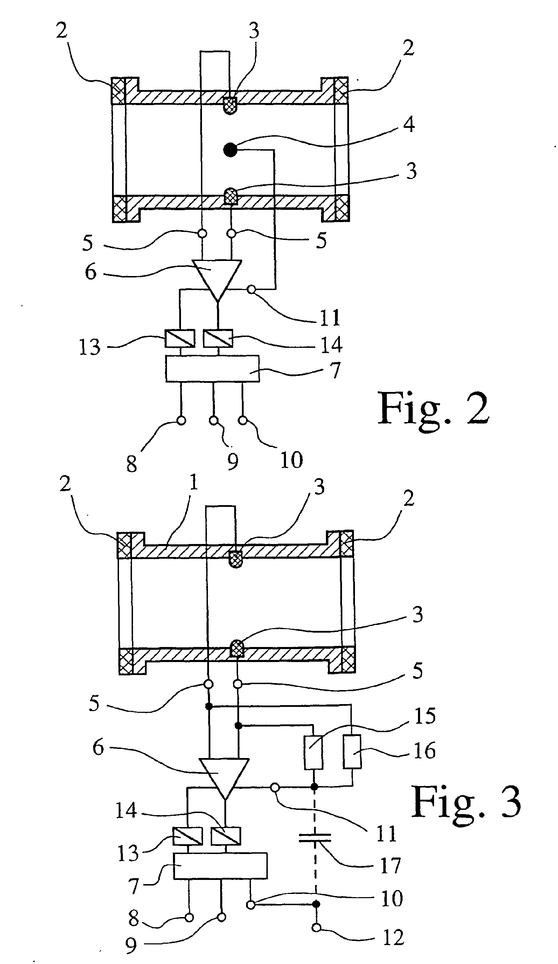

Demgegenüber ist in der Fig. 2 ein erfindungsgemäß ausgestaltetes magnetisch-induktives Durchflußmeßgerät für strömende Medien dargestellt, bei dem die übereinstimmenden Bauteile mit übereinstimmenden Bezugszeichen versehen sind.

Erfindungsgemäß ist das in Fig. 2 dargestellte erste Ausführungsbeispiel eines magnetisch-induktiven Durchflußmeßgerätes dadurch ausgestaltet, daß der Bezugspotentialanschluß 11 des Differenzverstärkers 6 nur mit der Bezugselektrode 4 und die Bezugselektrode 4 nur mit dem Bezugspotentialanschluß 11 des Differenzverstärkers 6 verbunden ist und daß der Differenzverstärker 6 nicht mit einem Potentialausgleich verbunden ist, insbesondere also gegenüber dem Erdpotential potentialmäßig getrennt ausgeführt ist. Im Ausführungsbeispiel ist dazu der Differenzverstärker 6 nur über Optokoppler 13, 14 mit der Elektronik 7 verbunden. Selbstverständlich kann die elektrische Potentialtrennung alternativ auch beispielsweise über Transformatoren erfolgen. Da bei dem in Fig. 2 dargestellten ersten Ausführungsbeispiel eines erfindungsgemäßen magnetisch-induktiven Durchflußmeßgerätes die Bezugselektrode 4 ausschließlich mit dem Bezugspotentialanschluß 11 des Differenzverstärkers 6 verbunden ist, fließen über die Bezugselektrode 4 lediglich sehr geringe, im wesentlichen durch den Differenzverstärker 6 bestimmte Ströme. Entsprechend ist die Bezugselektrode 4 nur einer geringen elektrochemischen Belastung unterworfen. Im Ergebnis kann also die Bezugselektrode 4 aus einem kostengünstigen, chemisch deutlich weniger als im Stand der Technik notwendig belastbaren Material bestehen.

Das in Fig. 3 der Zeichnung dargestellte zweite Ausführungsbeispiel eines erfindungsgemäßen magnetisch-induktiven Durchflußmeßgerätes unterscheidet sich von dem ersten Ausführungsbeispiel dadurch, daß eine besondere Bezugselektrode nicht vorhanden ist und der Bezugspotentialanschluß 11 des Differenzverstärkers 6 mit beiden Meßelektroden 3 über jeweils einen Widerstand 15, 16 verbunden ist. Es eiltstehen dabei durch die fehlende niederohmige elektrische Verbindung zwischen dem strömenden Medium und dem Potentialausgleich 12 Störspannungen, die möglichst nicht über dem Differenzverstärker 6, sondern über der Kapazität 17 zwischen dem Bezugspotentialanschluß 11 des Differenzverstärkers 6 und den, Potentialausgleich 12 abfallen sollten. Entsprechend ist die angedeutete Kapazität 17 so gering wie möglich zu halten. Außerdem muß der Eingangswiderstand des Differenzverstärkers 6 zwischen den Meßelektrodenanschlüssen 5 und dem Bezugspotentialanschluß 11 so klein wie möglich und der Eingangswiderstand zwischen den Meßelektrodenanschlüssen 5 so groß wie möglich sein.

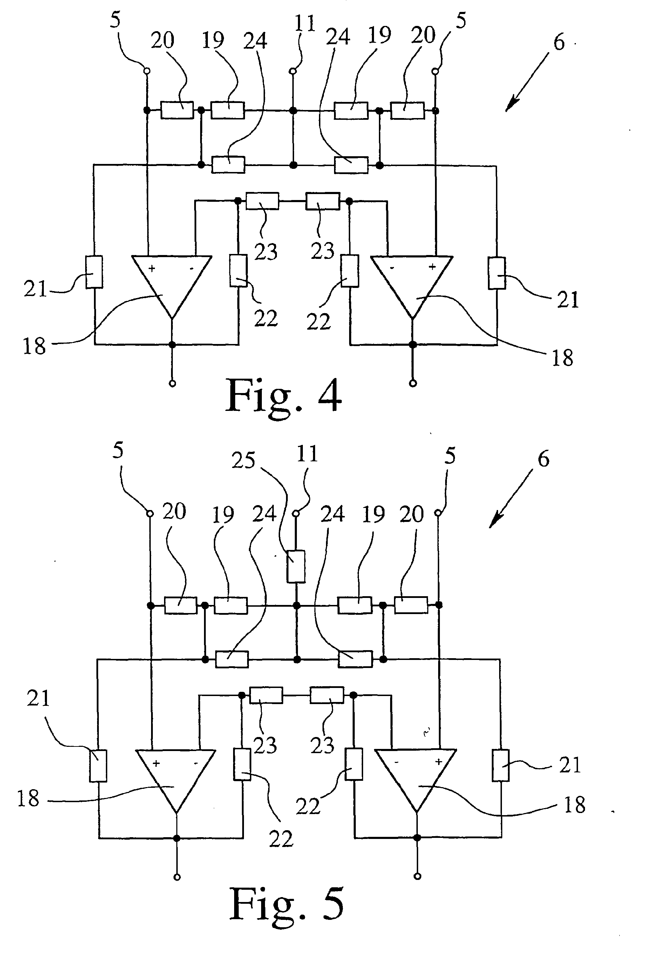

Ein erstes Ausführungsbeispiel eines geeigneten Differenzverstärkers 6 zum Einsatz in einem erfindungsgemäßen magnetisch-induktiven Durchflußmeßgerät ist in Fig. 4 dargestellt. Der Differenzverstärker 6 weist auf zwei jeweils mit ihren nicht-invertierenden Eingängen mit einem der Meßelektrodenanschlüsse 5 verbundene Operationsverstärker 18, jeweils zwei zwischen die Meßelektrodenanschlüsse 5 und den Bezugspotentialanschluß 11 geschaltete Gleichtakteingangswiderstände 19, 20, jeweils einen zwischen die Ausgänge der Operationsverstärker 18 und den jeweiligen Mittelabgriff der Gleichtakteingangswiderstände 19, 20 geschalteten Mitkopplungswiderstand 21, jeweils einen zwischen die Ausgänge der Opertionsverstärker 18 und die invertierenden Eingänge der Opertionsverstärker 18 geschalteten Verstärkungserhöhungswiderstand 22 und zwei zwischen die invertierenden Eingänge der Opertionsverstärker 18 geschaltete Verstärkungsbegrenzungswiderstände 23. Aus der beschriebenen Schaltung für den Differenzverstärker 6 ergibt sich, daß die Operationsverstärker 18 mit einer Gleichtaktverstärkung von $v_{cm} = 1$ und einer Differenzverstärkung von

$$v_{dm} = (R_{22} + R_{23})/R_{23} \qquad\qquad \text{Gl. 1}$$

geschaltet sind. Hierbei muß die Differenzverstärkung größer als die Gleichtaktverstärkung dimensioniert werden,

$$v_{dm} > v_{cm}. \qquad\qquad \text{Gl. 2}$$

Der Eingangswiderstand des Differenzverstärkers 6 zwischen den Meßelektrodenanschlüssen 5 und dem Bezugspotentialanschluß 11 entspricht im wesentlichen dem Widerstand des Gleichtakteingangswiderstandes 20, der über den Gleichtakteingangswiderstand 19 und den Mitkopplungswiderstand 21 gebootstrappt wird. Dabei ist der Gleichtakteingangswiderstand 19 wesentlich niederohmiger als der Gleichtakteingangswiderstand 20. Der zusätzlich zwischen dem Mittelabgriff der Gleichtakteingangswiderstände 19, 20 und den Bezugspotentialanschluß 11 geschaltete Kompensationswiderstand 24 dient lediglich der Kompensation von Toleranzen.

Bei der beschriebenen Schaltung für den Differenzverstärker 6 gilt für den Eingangswiderstand zwischen den Meßelektrodenanschlüssen 5 folgende Gleichung:

$$R_{diff} = 2 * R_{20}/\{1 - [(R_{22} + R_{23})/R_{22} * R_{19}/(R_{21} + R_{19})]\} \qquad \text{Gl. 3}$$

Für $R_{22}/R_{23} = R_{21}/R_{19}$ wird der Eingangswiderstand zwischen den Meßelektrodenanschlüssen 5 sehr groß; er ist nur durch die Widerstandstoleranzen bestimmt. Bei geeigneter Dimensionierung läßt sich der Eingangswiderstand zwischen den Meßelektrodenanschlüssen 5 auf den bis zu 100-fachen Widerstand des Gleichtakteingangswiderstandes 20 erhöhen. Demgegenüber gilt für den Eingangswiderstand zwischen den Meßelektrodenanschlüssen 5 und dem Bezugspotentialanschluß 11

$$R_{com} = 0,5 * (R_{20} + R_{19}) \qquad \text{Gl. 4}$$

In Fig. 5 ist schließlich ein zweites Ausführungsbeispiel eines Differenzverstärkers 6 zum Einsatz in einem erfindungsgemäßen magnetisch-induktiven Durchflußmeßgerät dargestellt. Zusätzlich zu den Bauteilen, die zu dem Differenzverstärker 6 nach Fig. 4 gehören, ist bei dem in Fig. 4 dargestellten zweiten Ausführungsbeispiel eines Differenzverstärkers 6 lediglich ein Symmetrisierungswiderstand 25 vor den Bezugspotentialanschluß 11 geschaltet, so daß die Empfindlichkeit des Differenzverstärkers 6 gegenüber durch Widerstandstoleranzen bedingte Unsymmetrien reduziert ist. Für den Eingangswiderstand zwischen den Meßelektrodenanschlüssen 5 gilt weiterhin Gleichung 3, während für den Eingangswiderstand zwischen den Meßelektrodenanschlüssen 5 und dem Bezugspotentialanschluß 11 nunmehr gilt

$$R_{com} = 0,5 * (R_{20} + R_{19} + 2 * R_{25}) \qquad \text{Gl. 5}$$

**Patentansprüche**

1. Magnetisch-induktives Durchflußmeßgerät für strömende Medien, mit einem Meßrohr (1), einem der Erzeugung eines zumindest im wesentlichen senkrecht zur Meßrohrachse verlaufenden Magnetfeldes dienenden Magneten, mindestens zwei entlang einer, zumindest im wesentlichen senkrecht zur Meßrohrachse und zur Magnetfeldrichtung verlaufenden Verbindungslinie angeordneten Meßelektroden (3), mit wenigstens einer Bezugselektrode (4) und einem über Meßelektrodenanschlüsse (5) mit den Meßelektroden (3) verbundenen, der Verstärkung der an den Meßelektroden (3) anliegenden Meßspannung dienenden, einen Bezugspotentialanschluß (11) aufweisenden Differenzverstärker (6), **dadurch gekennzeichnet, daß** der Bezugspotentialanschluß (11) des Differenzverstärkers (6) nur mit der Bezugselektrode (4) und die Bezugselektrode (4) nur mit dem Bezugspotentialanschluß (11) des Differenzverstärkers (6) verbunden ist und daß der Differenzverstärker (6) nicht mit einem Potentialausgleich verbunden ist.

2. Magnetisch-induktives Durchflußmeßgerät für strömende Medien, mit einem Meßrohr (1), mit einem der Erzeugung eines zumindest im wesentlichen senkrecht zur Meßrohrachse verlaufenden Magnetfeldes dienenden Magneten, mindestens zwei entlang einer, zumindest im wesentlichen senkrecht zur Meßrohrachse und zur Magnetfeldrichtung verlaufenden Verbindungslinie angeordneten Meßelektroden (3) und einem über Meßelektrodenanschlüsse (5) mit den Meßelektroden (3) verbundenen, der Verstärkung der an den Meßelektroden (3) anliegenden Meßspannung dienenden, einen Bezugspotentialanschluß (11) aufweisenden Differenzverstärker (6), **dadurch gekennzeichnet, daß** der Bezugspotentialanschluß (11) des Differenzverstärkers (6) nur mit mindestens einer Meßelektrode (3) verbunden ist und daß der Differenzverstärker (6) nicht mit einem Potentialausgleich verbunden ist.

3. Magnetisch-induktives Durchflußmeßgerät nach Anspruch 2, **dadurch gekennzeichnet, daß** der Bezugspotentialanschluß (11) des Differenzverstärkers (6) mit beiden Meßelektroden (3) über jeweils einen Widerstand (15, 16) verbunden ist.

4. Magnetisch-induktives Durchflußmeßgerät nach Anspruch 2 oder 3, **dadurch gekennzeichnet, daß** die Kapazität (17) zwischen dem Bezugspotentialanschluß (11) und einem Potentialausgleich möglichst gering ist.

5. Magnetisch-induktives Durchflußmeßgerät nach einem der Ansprüche 1 bis 4, **dadurch gekennzeichnet, daß** der Differenzverstärker (6) einen den Eingangswiderstand zwischen den Meßelektrodenanschlüssen (5) und dem Bezugspotentialanschluß (11) mindestens um den Faktor 5 übersteigenden Eingangswiderstand zwischen den Meßelektrodenanschlüssen (5) aufweist.

6. Magnetisch-induktives Durchflußmeßgerät nach einem der Ansprüche 1 bis 5, **dadurch gekennzeichnet, daß** der Differenzverstärker (6) zwei jeweils mit ihren nichtinvertierenden Eingängen mit einem der Meßelektrodenanschlüsse (5) verbundenen Operationsverstärker (18), jeweils zwei zwischen die Meßelektrodenanschlüsse (5) und den Bezugspotentialanschluß (11) geschaltete Gleichtakteingangswiderstände (19, 20), jeweils einen zwischen die Ausgänge der Opertionsverstärker (18) und den jeweiligen Mittelabgriff der Gleichtakteingangswiderstände (19, 20) geschalteten Mitkopplungswiderstand (21), jeweils einen zwischen die Ausgänge der Operationsverstärker (18) und die invertierenden Eingänge der Operationsverstärker geschalteten Verstärkungserhöhungswiderstand (22) und mindestens einen zwischen die invertierenden Widerstände der Operationsverstärker (18) geschalteten Verstärkungsbegrenzungswiderstand (23) aufweist.

7. Magnetisch-induktives Durchflußmeßgerät nach Anspruch 6, **dadurch gekennzeichnet, daß** die Differenzverstärkung der Operationsverstärker (18) größer ist als ihre Gleichtaktverstärkung.

8. Magnetisch-induktives Durchflußmeßgerät nach Anspruch 6 oder 7, **dadurch gekennzeichnet, daß** jeweils der mit einem der Meßelektrodenanschlüsse (5) verbundene Gleichtakteingangswiderstand (20) einen deutlich höheren Widerstand aufweist als der mit dem Bezugspotentialanschluß (11) verbundene Gleichtakteingangswiderstand (19).

9. Magnetisch-induktives Durchflußmeßgerät nach einem der Ansprüche 6 bis 8, **dadurch gekennzeichnet, daß** zwischen den Mittelabgriff der Gleichtakteingangswiderstände (19, 20) und den Bezugspotentialanschluß (11) jeweils ein Kompensationswiderstand (24) geschaltet ist.

10. Magnetisch-induktives Durchflußmeßgerät nach einem der Ansprüche 6 bis 9, **dadurch gekennzeichnet, daß** vor den Bezugspotentialanschluß (11) ein Symmetrisierungswiderstand (25) geschaltet ist.

11. Magnetisch-induktives Durchflußmeßgerät nach einem der Ansprüche 6 bis 10, **dadurch gekennzeichnet, daß** zumindest die niederohmigen Gleichtakteingangswiderstände (19), die Mitkopplungswiderstände (21), die Verstärkungserhöhungswiderstände (22) und der Verstärkungsbegrenzungswiderstand (23) auf mindestens einem Substrat in Dünnfilmtechnik ausgeführt sind.

**Claims**

1. Magneto-inductive flowmeter for flowing media, having a measuring tube (1), a magnet which is used to produce a magnetic field running at least essentially at right angles to the measuring tube axis, at least two measuring electrodes (3) arranged along a connecting line running at least essentially at right angles to the measuring tube axis and to the magnetic field direction, having at least one reference electrode (4) and a differential amplifier (6) which is connected to the measuring electrodes (3) via measuring electrode connections (5), is used to amplify the measuring voltage on the measuring electrodes (3) and has a reference potential connection (11), **characterized in that** the reference potential connection (11) of the differential amplifier (6) is connected only to the reference electrode (4) and the reference electrode (4) is connected only to the reference potential connection (11) of the differential amplifier (6), and **in that** the differential amplifier (6) is not connected to an equipotential bonding point.

2. Magneto-inductive flowmeter for flowing media, having a measuring tube (1), having a magnet which is used to produce a magnetic field running at least essentially at right angles to the measuring tube axis, at least two measuring electrodes (3) arranged along a connecting line running at least essentially at right angles to the measuring tube axis and to the magnetic field direction, and a differential amplifier (6) which is connected to the measuring electrodes (3) via measuring electrode connections (5), is used to amplify the measuring voltage on the measuring electrodes (3) and has a reference potential connection (11), **characterized in that** the reference potential connection (11) of the differential amplifier (6) is connected only to at least one measuring electrode (3), and **in that** the differential amplifier (6) is not connected to an equipotential bonding point.

3. Magneto-inductive flowmeter according to Claim 2, **characterized in that** the reference potential connection (11) of the differential amplifier (6) is connected to both measuring electrodes (3) via a respective resistor (15, 16).

4. Magneto-inductive flowmeter according to Claim 2 or 3, **characterized in that** the capacitance (17) between the reference potential connection (11) and an equipotential bonding point is as low as possible.

5. Magneto-inductive flowmeter according to one of Claims 1 to 4, **characterized in that** the differential amplifier (6) has an input resistance between the measuring electrode connections (5) which exceeds the input resistance between the measuring electrode connections (5) and the reference potential connection (11) at least by a factor of 5.

6. Magneto-inductive flowmeter according to one of Claims 1 to 5, **characterized in that** the differential amplifier (6) has two operational amplifiers (18) which each have their non-inverting inputs connected to one of the measuring electrode connections (5), two respective common-mode input resistors (19, 20) connected between the measuring electrode connections (5) and the reference potential connection (11), a respective positive-feedback resistor (21) connected between the outputs of the operational amplifiers (18) and the respective centre tap of the common-mode input resistors (19, 20), a respective gain-increasing resistor (22) connected between the outputs of the operational amplifiers (18) and the inverting inputs of the operational amplifiers, and at least one gain-limiting resistor (23) connected between the inverting resistors of the operational amplifiers (18).

7. Magneto-inductive flowmeter according to Claim 6, **characterized in that** the differential gain of the operational amplifiers (18) is greater than their common-mode gain.

8. Magneto-inductive flowmeter according to Claim 6 or 7, **characterized in that** the respective common-mode input resistor (20) connected to one of the measuring electrode connections (5) has a significantly higher resistance than the common-mode input resistor (19) connected to the reference potential connection (11).

9. Magneto-inductive flowmeter according to one of Claims 6 to 8, **characterized in that** the centre tap of the common-mode input resistors (19, 20) and the reference potential connection (11) have a respective compensating resistor (24) connected between them.

10. Magneto-inductive flowmeter according to one of Claims 6 to 9, **characterized in that** the reference potential connection (11) has a balancing resistor (25) connected upstream of it.

11. Magneto-inductive flowmeter according to one of Claims 6 to 10, **characterized in that** at least the low-value common-mode input resistors (19), the positive-feedback resistors (21), the gain-increasing resistors (22) and the gain-limiting resistor (23) are produced on at least one substrate using thin-film technology.

**Revendications**

1. Débitmètre magnéto-inductif pour des fluides qui s'écoulent, comprenant un tube de mesure (1), un aimant servant à générer un champ magnétique qui s'étend au moins pour l'essentiel perpendiculairement à l'axe du tube de mesure, au moins deux électrodes de mesure (3) disposées le long d'une ligne de liaison au moins pour l'essentiel perpendiculairement à l'axe du tube de mesure et à la direction du champ magnétique, comprenant au moins une électrode de référence (4) et un amplificateur différentiel (6) relié aux électrodes de mesure (3) par le biais de bornes d'électrode de mesure (5), servant à l'amplification de la tension de mesure appliquée aux électrodes de mesure (3) et présentant une borne de potentiel de référence (11), **caractérisé en ce que** la borne de potentiel de référence (11) de l'amplificateur différentiel (6) est uniquement reliée à l'électrode de référence (4) et l'électrode de référence (4) est uniquement reliée à la borne de potentiel de référence (11) de l'amplificateur différentiel (6) et que l'amplificateur différentiel (6) n'est pas relié avec un équilibrage des potentiels.

2. Débitmètre magnéto-inductif pour des fluides qui s'écoulent, comprenant un tube de mesure (1), un aimant servant à générer un champ magnétique qui s'étend au moins pour l'essentiel perpendiculairement à l'axe du tube de mesure, au moins deux électrodes de mesure (3) disposées le long d'une ligne de liaison au moins pour l'essentiel perpendiculairement à l'axe du tube de mesure et à la direction du champ magnétique et un amplificateur différentiel (6) relié aux électrodes de mesure (3) par le biais de bornes d'électrode de mesure (5), servant à l'amplification de la tension de mesure appliquée aux électrodes de mesure (3) et présentant une borne de potentiel de référence (11), **caractérisé en ce que** la borne de potentiel de référence (11) de l'amplificateur différentiel (6) est uniquement reliée à au moins une électrode de mesure (3) et que l'amplificateur différentiel (6) n'est pas relié avec un équilibrage des potentiels.

**3.** Débitmètre magnéto-inductif selon la revendication 2, **caractérisé en ce que** la borne de potentiel de référence (11) de l'amplificateur différentiel (6) est reliée avec les deux électrodes de mesure (3) à chaque fois par le biais d'une résistance (15, 16).

**4.** Débitmètre magnéto-inductif selon la revendication 2 ou 3, **caractérisé en ce que** la capacité (17) entre la borne de potentiel de référence (11) et un équilibrage des potentiels est la plus faible possible.

**5.** Débitmètre magnéto-inductif selon l'une des revendications 1 à 4, **caractérisé en ce que** l'amplificateur différentiel (6) présente entre les bornes d'électrode de mesure (5) une résistance d'entrée qui est supérieure au moins d'un facteur 5 à la résistance d'entrée entre les bornes d'électrode de mesure (5) et la borne de potentiel de référence (11).

**6.** Débitmètre magnéto-inductif selon l'une des revendications 1 à 5, **caractérisé en ce que** l'amplificateur différentiel (6) présente deux amplificateurs opérationnels (18) respectivement reliés par leurs entrées non inverseuses avec l'une des bornes d'électrode de mesure (5), respectivement deux résistances d'entrée de mode commun (19, 20) branchées entre les bornes d'électrode de mesure (5) et la borne de potentiel de référence (11), respectivement une résistance de contre-réaction positive (21) branchée entre les sorties des amplificateurs opérationnels (18) et la prise centrale correspondante des résistances d'entrée de mode commun (19, 20), respectivement une résistance d'élévation du gain (22) branchée entre les sorties des amplificateurs opérationnels (18) et les entrées inverseuses des amplificateurs opérationnels et au moins une résistance de limitation du gain (23) branchée entre les résistances inverseuses des amplificateurs opérationnels (18).

**7.** Débitmètre magnéto-inductif selon la revendication 6, **caractérisé en ce que** le gain différentiel des amplificateurs opérationnels (18) est supérieur à son gain en mode commun.

**8.** Débitmètre magnéto-inductif selon la revendication 6 ou 7, **caractérisé en ce qu'**à chaque fois la résistance d'entrée de mode commun (20) reliée avec l'une des bornes d'électrode de mesure (5) présente une résistance nettement supérieure à celle de la résistance d'entrée de mode commun (19) reliée avec la borne de potentiel de référence (11).

**9.** Débitmètre magnéto-inductif selon l'une des revendications 6 à 8, **caractérisé en ce qu'**une résistance de compensation est respectivement branchée entre la prise centrale des résistances d'entrée de mode commun (19, 20) et la borne de potentiel de référence (11).

**10.** Débitmètre magnéto-inductif selon l'une des revendications 6 à 9, **caractérisé en ce qu'**une résistance de symétrisation (25) est branchée avant la borne de potentiel de référence (11).

**11.** Débitmètre magnéto-inductif selon l'une des revendications 6 à 10, **caractérisé en ce qu'**au moins les résistances d'entrée de mode commun de faible valeur (19), les résistances de contre-réaction positive (21), les résistances d'élévation du gain (22.) et la résistance de limitation du gain (23) sont réalisées sur au moins un substrat en technique de film mince.

# Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5325728 A
- DE 1473049 A
- EP 0027181 A2
- US 3491593 A